# EUROPÄISCHE PATENTSCHRIFT

(11) **EP 2 714 360 B1**
(45) Veröffentlichungstag und Bekanntmachung des Hinweises auf die Patenterteilung: **26.12.2018**
(21) Anmeldenummer: 12723477.1
(22) Anmeldetag: 24.05.2012
(51) Int. Cl.: B29C 45/14

(54) **VORRICHTUNG ZUM UMSPRITZEN EINES BAUTEILS MIT KUNSTSTOFF**
DEVICE FOR ENCAPSULATING A COMPONENT WITH PLASTIC MATERIAL
DISPOSITIF POUR ENROBER UN ÉLÉMENT DE PLASTIQUE

(30) Priorität: 31.05.2011 DE 102011076747; 31.05.2011 DE 202011103625 U
(43) Veröffentlichungstag der Anmeldung: 09.04.2014
(73) Patentinhaber: Robert Bosch GmbH, 70442 Stuttgart (DE)
(72) Erfinder: KUNERT, Peter, 72805 Lichtenstein (DE); OHL, Christian, 72793 Pfullingen (DE); WAIBLER, Matthias, 73630 Remshalden-Hebsack (DE); LUDWIG, Matthias, 72116 Moessingen (DE); BLUM, Andreas, 72762 Reutlingen (DE)
(86) Internationale Anmeldenummer: PCT/EP2012/059652
(87) Internationale Veröffentlichungsnummer: WO 2012/163775

(56) Entgegenhaltungen:
- DE-A1-102004 044 864
- DE-A1-102004 050 141
- US-A- 5 827 440
- US-A1- 2006 202 388

## Beschreibung

### Stand der Technik

Die Erfindung betrifft eine Vorrichtung zum Umspritzen eines Bauteils mit Kunststoff nach dem Oberbegriff des Anspruchs 1.

Eine derartige Vorrichtung ist aus der DE 10 2004 050 864 A1 bekannt. Bei der bekannten Vorrichtung ist ein zweiteiliges Halteelement vorgesehen, das an einer Seite des zu umspritzenden Bauteils anliegt und dadurch in seiner Position hält. Weiterhin ist der eine, stiftförmige Teil des Halteelements von einem rohrförmigen zweiten Teil des Halteelements umgeben, das als passives Element beim Einspritzen des Kunststoffs in das Spritzgußwerkzeug vom Kunststoff verdrängt wird. Das bekannte, zweiteilig ausgebildete Halteelement beeinflusst zumindest im Wesentlichen nicht die Zuströmung des (verflüssigten) Kunststoffs in das Spritzgußwerkzeug. Insbesondere dient es nicht zum Starten bzw. Beenden des Einspritzvorgangs des Kunststoffs in das Spritzgußwerkzeug.

Aus der DE 10 2007 036 264 A1 ist eine weitere Vorrichtung bekannt, die ein aus zwei Werkzeughälften bestehendes Werkzeug auf weist, die gegeneinander verfahrbar sind, und die in geschlossenem Zustand eine Aufnahme zum Umspritzen eines Bauteils ausbilden. In der einen Werkzeughälfte ist eine Durchgangsöffnung ausgebildet, in der ein Schieber längsbeweglich angeordnet ist, der zum Positionieren des zu umspritzenden Bauteils dient. Bei dem zu umspritzenden Bauteil handelt es sich in der vorbekannten Schrift um ein Permanentmagnetelement, so dass dieses allein durch Auflage auf der ebenen Oberfläche des stiftförmigen, aus Metall bestehenden Halteelements positioniert werden kann. Sobald das zu umspritzende Bauteil bereichsweise umspritzt ist und der Kunststoff erstarrt ist, kann das Haltelement in seiner Durchgangsbohrung zurückgezogen werden, wonach anschließend in einem zweiten Schritt des Umspritzens der noch nicht umspritze Bereich des Bauteils mit Kunststoff umspritzt werden kann. Problematisch ist das Positionieren eines zu umspritzenden Bauteils mittels eines einzigen Haltelements, wenn dieses nicht, wie in der vorbekannten Schrift, beispielsweise durch magnetische Wirkung positioniert wird.

Aus der DE 196 20 002 B4 ist daher eine weitere Vorrichtung zum Umspritzen eines Bauteils bekannt, bei der vier Haltestifte zum Positionieren des zu umspritzenden Bauteils vorgesehen sind, die von zwei Seiten gegen das Bauteil in Ausnehmungen des Bauteils eingeführt werden. Eine derartige, mit mehreren Halteelementen ausgestattete Vorrichtung ist jedoch relativ aufwendig aufgebaut, da die Halteelemente beweglich angeordnet werden müssen. Darüber hinaus ist die Verwendung mehrerer Halteelemente gegebenenfalls durch die Geometrie des zu umspritzenden Bauteils beschränkt, oder es sind mehrere Schritte zum Umspritzen des Bauteils erforderlich, bis dieses vollständig umspritzt ist.

### Offenbarung der Erfindung

Ausgehend von dem dargestellten Stand der Technik liegt der Erfindung die Aufgabe zugrunde, eine Vorrichtung zum Umspritzen eines Bauteils mit Kunststoff nach dem Oberbegriff des Anspruchs 1 derart weiterzubilden, dass bei möglichst einfach und kompakt aufgebauter Vorrichtung ein sicheres Positionieren des zu umspritzenden Bauteils in der Aufnahme der Vorrichtung bei guter Führung des Halteelements und gleichzeitiger Möglichkeit der Beeinflussung der Zuströmung des Kunststoffs in das Spritzgußwerkzeug erzielt wird. Diese Aufgabe wird bei einer Vorrichtung zum Umspritzen eines Bauteils mit Kunststoff mit den Merkmalen des Anspruchs 1 gelöst.

Vorteilhafte Weiterbildungen der erfindungsgemäßen Vorrichtung zum Umspritzen eines Bauteils sind in den Unteransprüchen angegeben.

In einer besonders bevorzugten konstruktiven Ausgestaltung des einzigen Halteelements wird vorgeschlagen, dass das Halteelement auf der dem Bauteil zugewandten Seite einen Aufnahmebereich zum bereichsweisen Umschließen des Bauteils aufweist. Beispielsweise kann das Halteelement hierzu hülsenförmig ausgebildet sein, während das Bauteil einen stiftförmigen Fortsatz aufweist, der in den hülsenförmigen Aufnahmebereich hineinragt. Durch eine entsprechende Dimensionierung der Durchmesser des Aufnahmebereichs und des Fortsatzes am Bauteil kann dann der erforderliche Klemmschluss bzw. Formschluss erzielt werden.

Der Aufbau des Werkzeugs lässt sich darüber hinaus besonders einfach gestalten, wenn das Halteelement und das Element in einem Werkzeugteil angeordnet sind, wobei das Werkzeugteil wenigstens einen Zuführbereich für den Kunststoff aufweist, in der das Halteelement und das Element teilweise angeordnet sind. Dadurch kann das andere Werkzeugteil von zusätzlichen Führungen für das Halteelement bzw. das Element zur Beeinflussung der Zuströmung des flüssigen Kunststoffs freigehalten werden, so dass dieses besonders einfach ausgebildet werden kann.

Eine weitere konstruktiv vorteilhafte Ausgestaltung betrifft den Bereich, in dem der verflüssigte Kunststoff in die Aufnahme des Werkzeugs eintritt. Hierbei wird vorgeschlagen, dass in dem einen Werkzeugteil zwischen dem Element und dem Werkzeugteil der Einspritzkanal ausgebildet ist, wobei der Öffnungsquerschnitt des Einspritzkanals über die Position des Elements steuerbar ist, und wobei der Kunststoff das Element im Bereich des Einspritzkanals radial umströmt.

Ganz besonders bevorzugt ist dabei eine Ausbildung des Elements, bei der dieses an seiner Außenwand einen im Durchmesser reduzierten Abschnitt zum Verschließen und Öffnen des Einspritzkanals aufweist, wobei, besonders bevorzugt, der Abschnitt als Ringnut ausgebildet ist. Eine derartige Ausbildung des Elements bewirkt insbesondere eine besonders gute Umströmung des zu umspritzenden Bauteils mit dem Kunststoff und darüber hinaus eine verringerte Belastung der Verbindung zwischen dem Halteelement und dem Bauteil, da der flüssige Kunststoff durch die radiale Umströmung des Bauteils nicht direkt auf die Stirnseite des Bauteils auftreffen kann und somit eine Lösekraft auf die Verbindung ausübt.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1 bis 5: eine erste erfindungsgemäße Vorrichtung zum Umspritzen eines Bauteils mit Kunststoff während verschiedener Phasen des Umspritzens in jeweils vereinfachten Längsschnitten,
- Fig. 6 bis 10: eine gegenüber den Fig. 1 bis 5 modifizierte Vorrichtung, ebenfalls während verschiedener Phasen des Umspritzens eines Bauteils in vereinfachten Längsschnitten und
- Fig. 11: ein Detail der Fig. 7 in vergrößerter Darstellung.

Gleiche Bauteile bzw. Bauteile mit gleicher Funktion sind in den Figuren mit den gleichen Bezugsziffern versehen.

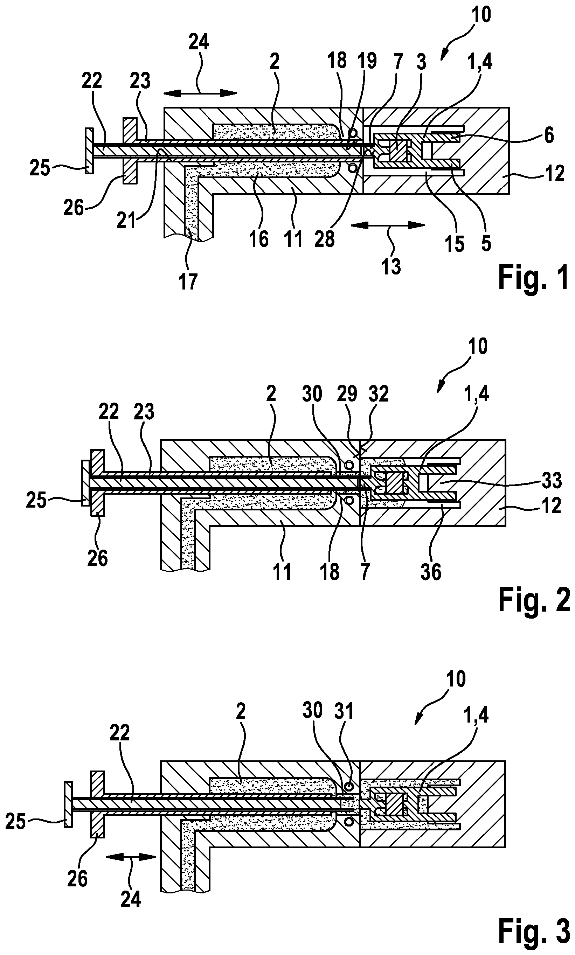

In den Fig. 1 bis 5 ist eine erste erfindungsgemäße Vorrichtung 10 zum Umspritzen eines Bauteils 1 mit Kunststoff 2 dargestellt. Bei dem Bauteil 1 handelt es sich beispielsweise, jedoch nicht einschränkend, um einen eine elektronische Schaltung 3 aufweisenden Sensor 4, der beispielhaft über zwei elektrische Anschlussfahnen 5, 6 elektrisch kontaktierbar ist. Hierbei soll der Sensor 4, mit Ausnahme im Bereich der Anschlussfahnen 5, 6, mit dem Kunststoff 2 umspritzt werden.

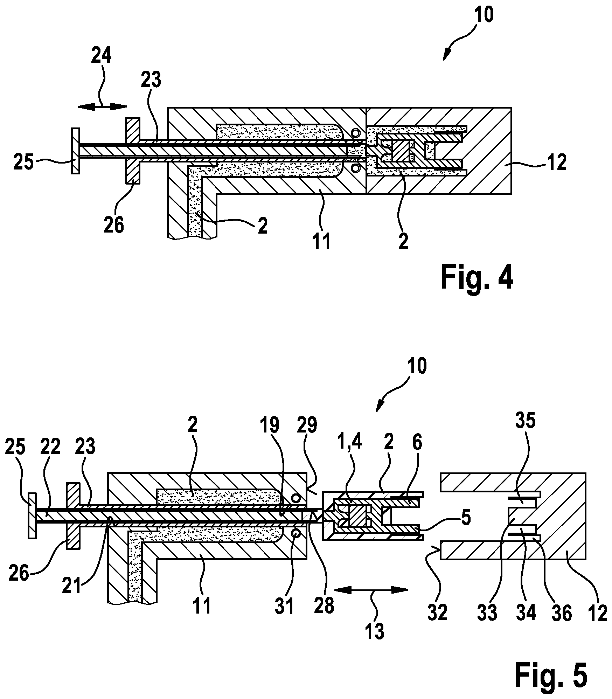

Die Vorrichtung 10 weist zwei Werkzeughälften 11, 12 auf, die in Richtung des Doppelpfeils 13 mittels eines nicht dargestellten Antriebs gegeneinander verfahrbar sind. Dabei werden grundsätzlich zwei Stellungen der beiden Werkzeughälften 11, 12 unterschieden: In der einen, in der Fig. 5 dargestellten Stellung kann der Sensor 4 vor dem Umspritzen in die Vorrichtung 10 eingebracht werden sowie nach dem Umspritzen aus der Vorrichtung 10 entnommen werden, während in der in den Fig. 1 bis 4 dargestellten geschlossenen Stellung der beiden Werkzeughälften 11, 12 eine Aufnahme 15 ausgebildet wird, die zum Umspritzen des Sensors 4 und zum Ausbilden der äußeren Kontur des umspritzten Sensors 4 mit dem Kunststoff 2 ausgespritzt werden kann.

Die eine Werkzeughälfte 11 ist beispielsweise im Längsschnitt L-förmig ausgebildet mit einem im Wesentlichen ringförmig ausgebildeten ersten Zuführbereich 16 für verflüssigten Kunststoff 2 und einem rechtwinklig zum Zuführbereich 16 angeordneten zweiten Zuführbereich 17, über den der verflüssigte Kunststoff 2 in den ersten Zuführbereich 16 gelangt. Der erste Zuführbereich 16 bzw. die Werkzeughälfte 11 weist auf der der Werkzeughälfte 12 zugewandten Seite einen flanschförmig eingezogenen Wandabschnitt 18 mit einer Durchgangsöffnung 19 auf. Fluchtend mit der Durchgangsöffnung 19 ist auf der dem Wandabschnitt 18 abgewandten Seite des ersten Zuführbereichs 16 eine weitere Durchgangsöffnung 21 ausgebildet. Die beiden Durchgangsöffnungen 19, 21 dienen der Führung eines als Halteelement ausgebildeten Schieberstiftes 22 und einer Düsennadel 23, die koaxial zueinander angeordnet sind, und die in Richtung des Doppelpfeils 24 voneinander unabhängig bewegbar sind, beispielsweise über außerhalb der Werkzeughälfte 11 angeordnete Betätigungsflansche 25, 26. Hierbei ist zumindest die Düsennadel 23 an ihrem Außenumfang abgedichtet in der weiteren Durchgangsöffnung 21 geführt.

Vorzugsweise sind die beiden Betätigungsflansche 25, 26 mit nicht dargestellten Antrieben gekoppelt, die eine gesteuerte Bewegung der Düsennadel 23 und des Schieberstiftes 22 ermöglichen.

Der Schieberstift 22 weist auf der dem Betätigungsflansch 25 abgewandten Seite eine Halteaufnahme 28 auf, die im dargestellten Ausführungsbeispiel als zylindrische Halteaufnahme 28 ausgebildet ist. Die Halteaufnahme 28 wirkt zum Positionieren und Halten des Bauteils 1 in der Aufnahme 15 mit einem an dem Bauteil 1 auf der der Halteaufnahme 28 zugewandten Seite ausgebildeten stiftförmigen Fortsatz 7 zusammen. Wesentlich dabei ist, dass die Dimensionierung des Fortsatzes 7 und der Halteaufnahme 28 derart aufeinander abgestimmt sind, dass zum Halten bzw. Positionieren des Bauteils 1 während des Umspritzens des Bauteils 1 mit Kunststoff 2 zwischen der Halteaufnahme 28 und dem Fortsatz 7 bzw. dem Bauteil 1 ein Form- bzw. Klemmschloss hergestellt ist, der ein Halten bzw. Positionieren des Bauteils 1 in der Aufnahme 15 während des Umspritzens des Bauteils 1 mit flüssigem Kunststoff 2 ermöglicht.

Ergänzend wird erwähnt, dass die Form der Halteaufnahme 28 bzw. des Fortsatzes 7 lediglich beispielhaft dargestellt sein soll und deren jeweilige Form dem jeweiligen Bauteil 1 bzw. dem Anwendungsfall angepasst werden muss, derart, dass zwischen der Halteaufnahme 28 bzw. dem Fortsatz 7 ein Form- bzw. Klemmschluss hergestellt werden kann.

Der Schieberstift 22 ist im Wesentlichen zwischen zwei Positionen innerhalb der Werkzeughälfte 11 verstellbar angeordnet: In der in den Fig. 1 und 2 dargestellten Stellung ragt die Halteaufnahme 28 in die Werkzeughälfte 12 bzw. die Aufnahme 15 hinein und hält das Bauteil 1 in der dafür vorgesehenen Position innerhalb der Aufnahme 15 fest. Demgegenüber befindet sich der Schieberstift 22 in einer im Bereich der Durchgangsöffnung 19 befindlichen Position zum vollständigen Umspritzen des Bauteils 1 mit dem Kunststoff 2, wie dies in den Fig. 3 und 4 dargestellt ist.

Die Düsennadel 23 ist im Wesentlichen rohrförmig ausgebildet und umschließt den Schieberstift 22 an dessen Außenumfang nahezu spaltlos, derart, dass der Schieberstift 22 zur Düsennadel 23 längsverschiebbar ist. Auch die Düsennadel 23 weist im Wesentlichen zwei Positionen auf: In der in den Fig. 1 und 4 dargestellten einen Position schließt die dem Betätigungsflansch 26 abgewandte Seite der Düsennadel 23 bündig mit der äußeren Stirnfläche 29 des Wandabschnitts 18 ab. Demgegenüber befindet sich die Düsennadel 23 in einer in den ersten Zuführbereich 16 eingefahrenen Position zum Abgeben des verflüssigten Kunststoffes 2 über einen zwischen dem Schieberstift 22 und der Durchgangsbohrung 19 ausgebildeten ringförmigen Kanal 30, wie es in den Fig. 2 und 3 dargestellt ist.

Vorzugsweise kann es vorgesehen sein, dass die Werkzeughälfte 11 im Bereich des Wandabschnitts 18 eine die Durchgangsöffnung 19 mit geringem Abstand umgebende Heizeinrichtung 31, zum Beispiel in Form eines Heizdrahtes aufweist, damit sichergestellt ist, dass der Kunststoff 2 beim Einspritzen in die Aufnahme 15 im verflüssigten Zustand vorliegt.

Die zweite Werkzeughälfte 12 ist im Wesentlichen topfförmig ausgebildet, derart, dass in der in Wirkverbindung mit der Werkzeughälfte 11 angeordneten Position der Werkzeughälfte 12 deren ringförmige Stirnfläche 32 dicht mit der Stirnfläche 29 der Werkzeughälfte 11 abschließt. Auf der der Stirnfläche 32 abgewandten Seite weist die Werkzeughälfte 12 in ihrem Inneren einen stiftförmigen Fortsatz 33 mit zwei Aufnahmeöffnungen 34, 35 auf, die der dichtenden Aufnahme der beiden Anschlussfahnen 5, 6 des Bauteils 1 dienen. Dabei ist die Ausbildung der Aufnahmeöffnungen 34, 35 jedoch derart, dass diese nicht für das Positionieren des Bauteils 1 in der Aufnahme 15 dienen, sondern lediglich der Abdichtung der Anschlussfahnen 5, 6, damit diese nicht vom Kunststoff 2 umspritzt werden. Zwischen dem Fortsatz 33 und der Innenwand der Werkzeughälfte 12 bildet die Aufnahme 15 einen ringförmigen Teilbereich 36 aus.

Die soweit beschriebene Vorrichtung 10 zum Umspritzen des Bauteils 1 mit Kunststoff 2 arbeitet wie folgt: In der in der Fig. 1 dargestellten Position der Vorrichtung 10 wurde das Bauteils 1 bereits vorab mit seinen Anschlussfahnen 5, 6 in die Aufnahmeöffnungen 34, 35 der Werkzeughälfte 12 positioniert sowie der Schieberstift 22 mit seiner Halteaufnahme 28 in Wirkverbindung mit dem Fortsatz 7 des Bauteils 1 gebracht. Weiterhin befindet sich die Werkzeughälfte 12 in ihrer gegen die Werkzeughälfte 11 verfahrenden Position, derart, dass durch die Stirnfläche 32 der Werkzeughälfte 11 und dem Innenraum der Werkzeughälfte 12 die Aufnahme 15 ausgebildet ist, die nach außen hin abgedichtet ist. In der in der Fig. 1 dargestellten Position ist es bereits vorzugsweise vorgesehen, dass verflüssigter bzw. erwärmter Kunststoff 2 sich in den Zuführbereichen 16, 17 der Werkzeughälfte 11 befindet. Hierzu ist die Düsennadel 23 in ihrer die Durchgangsöffnung 19 bzw. den Kanal 30 verschließenden Position, um zunächst ein Einspritzen von Kunststoff 2 in die Aufnahme 15 zu verhindern.

Anschließend wird entsprechend der Fig. 2 die Düsennadel 23 in ihre in die Aufnahme 15 zurückgefahrene Position bewegt, derart, dass Kunststoff 2 über den ringförmigen Kanal 30 in die Aufnahme 15 gelangen kann. Sobald die Aufnahme 15 vollständig mit Kunststoff 2 gefüllt ist wird die Düsennadel 23 in ihre in die Aufnahme 15 bzw. die Durchgangsöffnung 19 hineinragende Position zurückverfahren, so dass auch der Bereich des Fortsatzes 7 mit dem Kunststoff 2 umspritzt werden kann. Anschließend wird die Düsennadel 23 entsprechend der Fig. 4 wieder in ihre den ringförmigen Kanal 30 verschließende Position verfahren, damit die Aufnahme 15 von dem ersten Zuführbereich 16 getrennt ist, so dass der in der Aufnahme 15 das Bauteil 1 umschließende Kunststoff 2 abkühlen kann.

Zuletzt wird entsprechend der Fig. 5 die Werkzeughälfte 12 von der Werkzeughälfte 11 weg verfahren, so dass das mit Kunststoff 2 umspritzte Bauteil 1 aus der Werkzeughälfte 12 entformt bzw. entnommen werden kann.

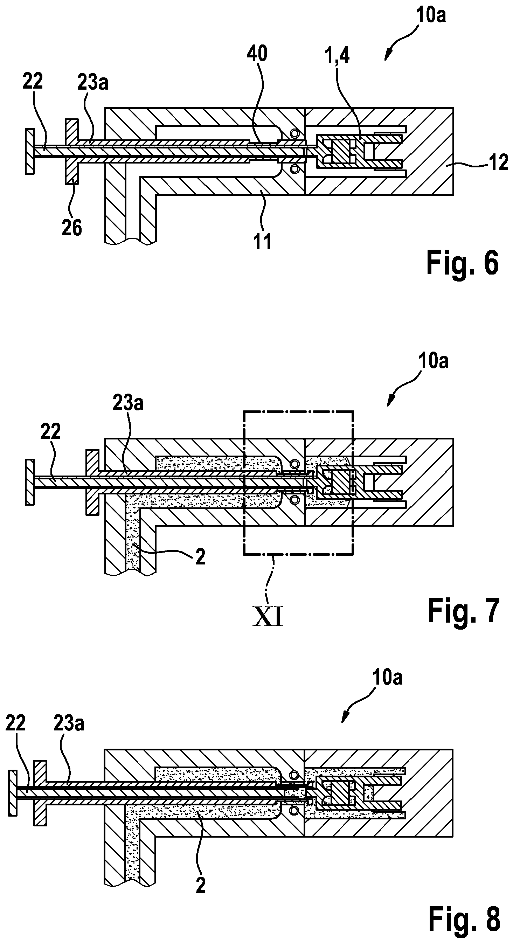

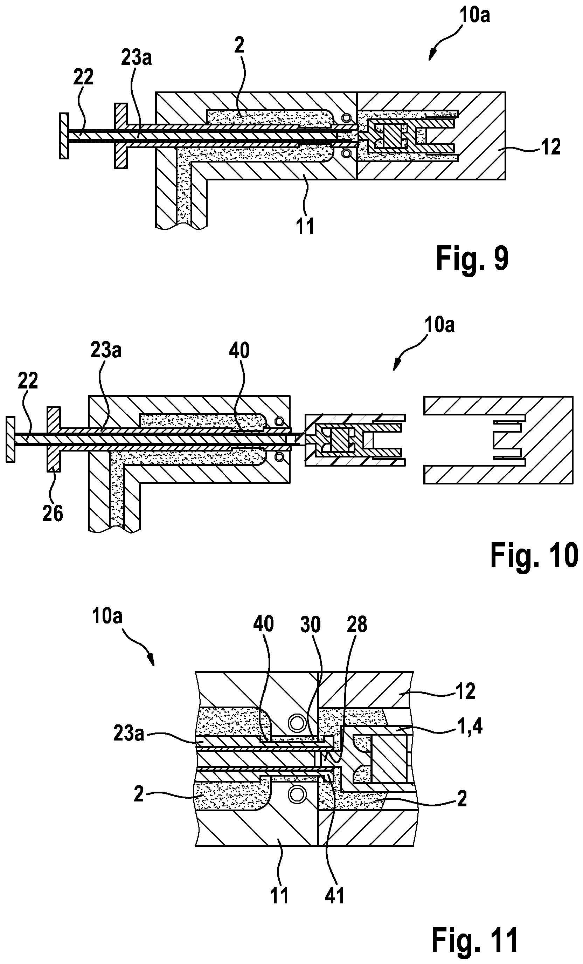

In den Fig. 6 bis 11 ist eine zweite erfindungsgemäße Vorrichtung 10a dargestellt. Die Vorrichtung 10a unterscheidet sich von der Vorrichtung 10 durch die Ausbildung der Düsennadel 23a. Hierbei weist die Düsennadel 23a auf der dem Betätigungsflansch 26 abgewandten Seite einen im Durchmesser reduzierten Abschnitt in Form einer radial umlaufenden Ringnut 40 auf. Wie insbesondere anhand der Fig. 11 erkennbar ist, wird im Gegensatz zu der Vorrichtung 10 zum Einspritzen des Kunststoffs 2 in die Aufnahme 15 die Düsennadel 23a in eine Position verfahren, in der sich die Ringnut 40 im Bereich des ringförmigen Kanals 30 befindet, derart, dass das Ende 41 der Düsennadel 23a axial derart zum Bauteil 1 positioniert wird, dass über den verbleibenden ringförmigen Kanal 30 zwischen der Düsennadel 23a und der Durchgangsöffnung 19 in die Aufnahme 15 einströmender Kunststoff 2 radial nach außen derart umgelenkt wird, dass dieser nicht auf die Stirnseite 8 des Bauteils 1 direkt auftrifft und dort keine Lösekraft auf das Bauteil 1 von der Halteaufnahme 28 erzeugen kann.

Die soweit beschriebenen Vorrichtungen 10, 10a können in vielfältiger Art und Weise abgewandelt bzw. modifiziert werden, ohne vom Erfindungsgedanken abzuweichen. So ist es insbesondere denkbar, dass die Vorrichtung 10, 10a aus mehr als zwei Werkzeughälften 11, 12 besteht. Darüber hinaus ist es auch denkbar, dass Bauteile 1 mit Kunststoff 2 umspritzt werden, die keine Anschlussfahnen 5, 6 aufweisen. Auch kann es vorgesehen sein, dass vor dem Zurückziehen des Schieberstiftes 22 vom Bauteil 1 entsprechend der Fig. 4 der in der Aufnahme 15 befindliche Kunststoff 2 teilweise erstarrt ist, um beim Zurückziehen des Schieberstiftes 22 zu gewährleisten, dass sich der Schieberstift 22 von dem Bauteil 1 trennt, ohne dass das Bauteil 1 von seiner Position in der Aufnahme 15 verschoben wird.

## Patentansprüche

1. Vorrichtung (10; 10a) zum Umspritzen eines Bauteils (1) mit Kunststoff (2), mit wenigstens zwei Werkzeugteilen (11,12), die in einer geschlossenen Anordnung zum Umspritzen des Bauteils (1) eine Aufnahme (15) für das Bauteil (1) ausbilden, mit einem Einspritzkanal (30) zum Zuführen des verflüssigten Kunststoffs (2) in den Bereich der Aufnahme (15), und mit einem einzigen Halteelement (22) zum Positionieren des Bauteils (1) in der Aufnahme (15), wobei das Halteelement (22) in eine erste Stellung zum Positionieren des Bauteils (1) in der Aufnahme (15) und in eine zweite Stellung zum vorzugsweise vollständigen Umspritzen des Bauteils (1) mit dem Kunststoff (2) bewegbar ist, wobei das Halteelement (22) das Bauteil (1) durch Form- bzw. Klemmschluss im Bereich der Aufnahme (15) hält, und wobei das Halteelement (22) zumindest im Wesentlichen stiftförmig ausgebildet ist,
**dadurch gekennzeichnet,**
**dass** das Halteelement (22) von einem der Steuerung der Zuströmung des Kunststoffs (2) in die Aufnahme (15) dienenden, rohrförmigen Element (23; 23a), zumindest bereichsweise, radial umgeben ist, und dass das Element (23; 23a) koaxial zum Halteelement (22) beweglich angeordnet ist.

2. Vorrichtung nach Anspruch 1,
**dadurch gekennzeichnet,**
**dass** das Halteelement (22) auf der dem Bauteil (1) zugewandten Seite einen Aufnahmebereich (28) zum bereichsweisen Umschließen des Bauteils (1) aufweist.

3. Vorrichtung nach Anspruch 1,
**dadurch gekennzeichnet,**
**dass** das Halteelement (22) und das Element (23; 23a) in einem Werkzeugteil (11) angeordnet sind, wobei das Werkzeugteil (11) wenigstens einen Zuführbereich (16, 17) für den Kunststoff (2) aufweist, in der das Halteelement (22) und das Element (23; 23a) teilweise angeordnet sind.

4. Vorrichtung nach Anspruch 3,
**dadurch gekennzeichnet,**
**dass** jeweils ein Betätigungsabschnitt (25, 26) zur Bewegungssteuerung des Halteelements (22) und des Elements (23; 23a) abgedichtet aus dem wenigstens einen Zuführbereich (16, 17) herausragen.

5. Vorrichtung nach Anspruch 3 oder 4,
**dadurch gekennzeichnet,**
**dass** in dem einen Werkzeugteil (11) zwischen dem Element (23; 23a) und dem Werkzeugteil (11) der Einspritzkanal (30) ausgebildet ist, wobei der Öffnungsquerschnitt des Einspritzkanals (30) über die Position des Elements (23; 23a) steuerbar ist, und wobei der Kunststoff (2) das Element (23; 23a) im Bereich des Einspritzkanals (30) radial umströmt.

6. Vorrichtung nach Anspruch 5,
**dadurch gekennzeichnet,**
**dass** das Element (23a) an seiner Außenwand einen im Durchmesser reduzierten Abschnitt zum Verschließen und Öffnen des Einspritzkanals (30) aufweist.

7. Vorrichtung nach Anspruch 6,
**dadurch gekennzeichnet,**
**dass** der Abschnitt als Ringnut (40) ausgebildet ist.

## Claims

1. Device (10; 10a) for encapsulating a component (1) with plastics material (2), having at least two tool halves (11, 12), which in a closed arrangement for encapsulating the component (1) form a receptacle (15) for the component (1), having an injection channel (30) for feeding the liquefied plastics material (2) into the region of the receptacle (15) and having a single holding element (22) for positioning the component (1) in the receptacle (15), the holding element (22) being movable into a first position, for positioning the component (1) in the receptacle (15), and into a second position, for preferably completely encapsulating the component (1) with the plastics material (2), wherein the holding element (22) holds the component (1) in the region of the receptacle (15) by interlocking or clamping engagement, and wherein the holding element (22) is formed in a substantially pin-shaped manner, **characterized**
**in that** the holding element (22) is radially surrounded, at least in certain regions, by a tubular element (23; 23a) serving for controlling the flow of the plastics material (2) into the receptacle (15), and in that the element (23; 23a) is movably arranged coaxially in relation to the holding element (22).

2. Device according to Claim 1, **characterized in that** the holding element (22) has on the side facing the component (1) a receiving region (28) for enclosing the component (1) in certain regions.

3. Device according to Claim 1, **characterized in that** the holding element (22) and the element (23; 23a) are arranged in one tool half (11), the tool half (11) having at least one feeding region (16, 17) for the plastics material (2), in which the holding element (22) and the element (23; 23a) are partially arranged.

4. Device according to Claim 3, **characterized in that** from the at least one feeding region (16, 17) there respectively protrude in a sealed manner an actuating portion (25, 26) for controlling the movement of the holding element (22) and of the element (23; 23a) .

5. Device according to Claim 3 or 4, **characterized in that** the injection channel (30) is formed in one tool part (11), between the element (23; 23a) and the tool part (11), the opening cross section of the injection channel (30) being controllable by means of the position of the element (23; 23a), and the plastics material (2) flowing radially around the element (23; 23a) in the region of the injection channel (30).

6. Device according to Claim 5, **characterized in that** the element (23a) has on its outer wall a portion of reduced diameter for closing and opening the injection channel (30).

7. Device according to Claim 6, **characterized in that** the portion is formed as an annular groove (40).

## Revendications

1. Dispositif (10 ; 10a) d'encapsulation d'un composant (1) avec une matière synthétique (2), comprenant au moins deux éléments d'outil (11, 12) qui forment, dans un agencement fermé pour encapsuler le composant (1), un logement (15) destiné au composant (1), un conduit d'injection (30) destiné à amener la matière synthétique (2) liquéfiée jusque dans la région du logement (15) et un élément de retenue unique (22) destiné à positionner le composant (1) dans le logement (15), l'élément de retenue (22) étant mobile jusque dans une première position pour positionner le composant (1) dans le logement (15) et jusque dans une deuxième position pour encapsuler, de préférence complètement, le composant (1) avec la matière synthétique (2), l'élément de retenue (22) retenant le composant (1) par complémentarité de formes ou par serrage dans la région du logement (15), et l'élément de retenue (22) étant conçu au moins sensiblement sous la forme de tige,
**caractérisé en ce que**
l'élément de retenue (22) est entouré radialement, au moins par zones, par un élément tubulaire (23 ; 23a), servant à commander l'afflux de matière synthétique (2) dans le logement (15) et **en ce que** l'élément (23 ; 23a) est disposé de manière à être mobile coaxialement à l'élément de retenue (22).

2. Dispositif selon la revendication 1,
**caractérisé en ce que**
l'élément de retenue (22) comporte, du côté tourné vers le composant (1), une zone de réception (28) destinée à enfermer par zones le composant (1).

3. Dispositif selon la revendication 1,
**caractérisé en ce que**
l'élément de retenue (22) et l'élément (23 ; 23a) sont disposés dans un élément d'outil (11), l'élément d'outil (11) comportant au moins une zone d'alimentation (16, 17) qui est destinée à la matière synthétique (2) et dans laquelle l'élément de retenue (22) et l'élément (23 ; 23a) sont partiellement disposés.

4. Dispositif selon la revendication 3,
**caractérisé en ce que**
une section d'actionnement (25, 26) destinée à la commande de mouvement de l'élément de retenue (22) et de l'élément (23 ; 23a) fait saillie de manière étanche de l'au moins une zone d'alimentation (16, 17).

5. Dispositif selon la revendication 3 ou 4,
**caractérisé en ce que**
le conduit d'injection (30) est formé dans l'un des éléments d'outil (11) situé entre l'élément (23 ; 23a) et l'élément d'outil (11),
la section transversale d'ouverture du conduit d'injection (30) pouvant être commandée par la position de l'élément (23 ; 23a), et
la matière synthétique (2) s'écoulant radialement autour de l'élément (23 ; 23a) dans la zone du conduit d'injection (30).

6. Dispositif selon la revendication 5,
**caractérisé en ce que**
l'élément (23a) comporte sur sa paroi extérieure une partie de diamètre réduit destinée à fermer et ouvrir le conduit d'injection (30).

7. Dispositif selon la revendication 6,
**caractérisé en ce que**
la section est conçue sous la forme d'une gorge annulaire (40).
